# EUROPÄISCHE PATENTSCHRIFT

(11) **EP 3 403 821 B1**
(45) Veröffentlichungstag und Bekanntmachung des Hinweises auf die Patenterteilung: **07.07.2021**
(21) Anmeldenummer: 18171298.5
(22) Anmeldetag: 08.05.2018
(51) Int. Cl.: B32B 5/30, B32B 5/22, B32B 5/24, B32B 9/04, B32B 13/04, B32B 13/12, B32B 13/14, B32B 37/06, B32B 38/00, B32B 38/08, C04B 28/26, D04H 1/42, D21J 1/20, D21H 13/40, E04B 1/74, B28B 1/26, B28B 1/52, C04B 33/04, C09K 21/02, E04B 1/94

(54) **VERFAHREN ZUR HERSTELLUNG EINES FORMTEILS MIT EINEM MEHRSCHICHTIGEN AUFBAU UND FORMTEIL**
METHOD FOR PRODUCING A MULTILAYERED MOLDED PIECE AND MULTILAYERED MOLDED STRUCTURE
PROCÉDÉ DE FABRICATION D'UNE PIÈCE MOULÉE MULTICOUCHE ET PRODUITS MULTICOUCHES

(30) Priorität: 18.05.2017 DE 102017208378
(43) Veröffentlichungstag der Anmeldung: 21.11.2018
(73) Patentinhaber: Techno-Physik Engineering GmbH, 45136 Essen (DE)
(72) Erfinder:
(74) Vertreter: Patentanwälte Ruff, Wilhelm, Beier, Dauster & Partner mbB

(56) Entgegenhaltungen:
- DE-A1-102007 026 970
- DE-A1-102014 115 940
- DE-C2- 4 139 745

## Beschreibung

### ANWENDUNGSGEBIET UND STAND DER TECHNIK

Die Erfindung betrifft ein Verfahren zur Herstellung eines Formteils mit einem mehrschichtigen Aufbau, das insbesondere als Wärmedämmteil verwendet werden soll. Des Weiteren betrifft die Erfindung ein solchermaßen hergestelltes Formteil bzw. Wärmedämmteil.

Es ist aus der DE 4139745 C2 bekannt, eine Dämmplatte oder Dämmmatte aus Glasfasern herzustellen. Dabei werden auch Mikroglasfasern verwendet. Dies ergibt eine Mikroglasfaser-Schicht als Formteil.

Aus der DE 102007026970 A1 ist es bekannt, ein Formteil zur Wärmedämmung mit Zeolithe und Schichtsilikat in Form von Vermiculite herzustellen. Dabei soll eine möglichst gute Wärmedämmung erreicht werden können.

Aus der DE 10 2014 115 940 A1 ist es bekannt, ein Formteil zur Isolation durch Gießen herzustellen. Das Formteil wird aus einer anorganischen Pulpe aus Wasser, Glasfasern und Schichtsilikat hergestellt und besteht somit aus quasi einer einzigen Schicht bzw. ist ein einziges durchgängiges homogenes Teil.

### AUFGABE UND LÖSUNG

Der Erfindung liegt die Aufgabe zugrunde, ein eingangs genanntes Verfahren sowie ein damit hergestelltes Formteil zu schaffen, mit denen Probleme des Standes der Technik gelöst werden können und es insbesondere möglich ist, ein Formteil zuverlässig und einfach herstellen zu können, welches vorteilhafte Eigenschaften hinsichtlich Wärmedämmung und/oder Brandschutzfestigkeit aufweist.

Gelöst wird diese Aufgabe durch ein Verfahren mit den Merkmalen des Anspruchs 1 sowie durch ein mit diesem Verfahren hergestelltes Formteil mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Formteil genannt. Sie sollen jedoch unabhängig davon sowohl für das Verfahren als auch für das damit hergestellte Formteil selbstständig und unabhängig voneinander gelten können. Der Wortlaut der Ansprüche wird durch ausdrückliche Bezugnahme zum Inhalt der Beschreibung gemacht.

Es ist vorgesehen, dass ein Formteil mit einem mehrschichten Aufbau hergestellt wird, wobei der mehrschichtige Aufbau mindestens eine Schichtsilikat-Schicht und mindestens eine Mikrofaser-Schicht aufweist. Vorteilhaft sind genau eine Schichtsilikat-Schicht und genau eine Mikrofaser-Schicht vorgesehen. Bei dem Verfahren werden mehrere Schritte durchgeführt, wobei beim ersten Schritt eine fertige Mikrofaser-Schicht oder fertige Matte aus Mikrofasern in eine Pressform gegeben oder eingelegt wird. Diese fertige Mikrofaser-Schicht oder fertige Matte muss nicht mehr weiter verpresst oder zusammengepresst werden. Danach wird ein Gemisch aus Schichtsilikat und Bindemittel als Schicht auf diese Mikrofaser-Schicht in der Pressform gegeben, vorteilhaft geschüttet. Alternativ ist es im Rahmen der Erfindung auch möglich, dass zuerst das Gemisch aus Schichtsilikat und Bindemittel als Schicht in die Pressform gegeben wird. Dann wird die Mikrofaser-Schicht in die Pressform auf dieses Gemisch gegeben oder eingelegt. Eine Füllhöhe des unverpressten Gemischs aus Schichtsilikat und Bindemittel kann das Zweifache bis Dreifache oder sogar Sechsfache der späteren Schichtdicke der fertigen Schichtsilikat-Schicht betragen. Danach werden das Gemisch bzw. der Schichtaufbau in der Pressform verpresst. Zum Pressen können unterschiedliche Verfahren genutzt werden, die von der Herstellung solcher gepressten Formteile bekannt sind. Vorteilhaft ist die Pressform eine Negativform, wobei besonders vorteilhaft ein Stempel als Positivform in diese Negativform eingefahren wird zum Verpressen der darin befindlichen Schichten bzw. Materialien. Unter Mikrofasern werden hier sehr kurze und dünne Fasern aus unterschiedlichen Materialien verstanden, die als Dämmmaterial geeignet sind.

Mit der Erfindung ist es also möglich, ein Formteil insbesondere zur Wärmedämmung herzustellen, welches durch den Schichtaufbau mehrere Eigenschaften kombiniert bzw. vorteilhaft aufweist. Die Mikrofasern bzw. die Mikrofaser-Schicht haben ein sehr gutes Wärmedämmvermögen, insbesondere können sie bei vorteilhafter Verwendung von Mikroglasfasern bei einer Temperaturbeständigkeit von bis zu 500°C eine geringe Wärmeleitfähigkeit von 0,029 W/mK aufweisen. So kann beispielsweise in gasbeheizten Thermen oder sonstigen Geräten zur Beheizung und/oder Warmwassererzeugung eine gute und wirkungsvolle Wärmedämmung erreicht werden.

Eine Temperaturbeständigkeit der Schichtsilikat-Schicht kann bei 1000°C bis 1100°C liegen bei einer Wärmeleitfähigkeit von 0,12 W/mK bis 0,16 W/mK, wenn vorteilhaft expandiertes Vermiculite verwendet wird. Sie kann also höhere Temperaturen vertragen als die Mikrofaser-Schicht, ihr Wärmedämmvermögen ist aber nicht so gut. Somit könnte diese Schicht mit Schichtsilikat hin zu einer sehr heißen Wärmequelle platziert werden, beispielsweise zur Auskleidung eines Brennraums, möglicherweise versehen mit einer dünnen Verkleidung von keramischem oder Schamotte-Material. Die nach außen gewandte Mikrofaser-Schicht sorgt dann für eine gute Wärmedämmung nach außen, so dass keine Wärme verloren geht und auf störende Art und Weise nach außen weitergegeben wird.

In vorteilhafter Ausgestaltung der Erfindung verbindet sich die Schichtsilikat-Schicht mit den Mikrofasern bzw. mit der Mikrofaser-Schicht oder einer Matte als fertige Mikrofaser-Schicht, so dass das Formteil insgesamt mechanisch stabil und leicht zu verarbeiten ist. Die Verbindung kann zwar auch durch eine geringe Einbindung von Schichtsilikat in die Mikrofaser-Schicht erfolgen, aber vorteilhaft und viel stärker ausgeprägt verbindet sich das Bindemittel des Schichtsilikat-Gemischs mit der Mikrofaser-Schicht. Das Bindemittel kann in die Mikrofaser-Schicht eindringen, vorteilhaft 0,1mm bis zu 1mm. So erfolgt die festigende Verbindung.

Eine solche Verbindung mit den Mikrofasern findet vorzugsweise zumindest in einem sogenannten Übergangsbereich zwischen den beiden Schichten statt, wobei ein solcher Übergangsbereich etwa 0,5% bis 3% oder sogar 5% der Dicke des Formteils aufweisen kann. In dem Übergangsbereich kann dann die vorgenannte Verbindung bzw. Vermischung des Bindemittels mit den Mikrofasern erfolgen. Diese könnte zwar auch zusätzlich herbeigeführt werden durch ein Einbringen zuerst einer relativ geringen Menge von dem Bindemittel, beispielsweise 2% bis 20% der gesamten Menge, auf die Mikrofaser-Schicht. Das Bindemittel alleine ohne das Schichtsilikat kann besser in die Mikrofaser-Schicht eindringen. Die restliche gewünschte Menge des Schichtsilikat-Gemischs kann dann darauf aufgebracht werden, sie wird sich dann gut mit dem Bindemittel-Gemisch verbinden. Danach erfolgt das eingangs genannte Verpressen.

Für die Mikrofasern, insbesondere als Mikroglasfasern, ist eine Faserlänge zwischen 0,1 mm und 10 mm vorgesehen, vorteilhaft wäre ein Anteil von mindestens 90% mit einer Faserlänge zwischen 1 mm und 8 mm. Ein Faserdurchmesser liegt zwischen 0,5 µm und 3 µm wobei vorteilhaft ein Anteil von mindestens 90% der Mikrofasern einen Faserdurchmesser zwischen 0,7 µm und 2,5 µm aufweist.

Zusätzlich können die Mikrofasern einen Feinstfaseranteil aufweisen mit Bindefasern, deren Länge unter 1,5 µm liegt. Deren Durchmesser ist dann nochmals erheblich geringer als der Vorgenannte. Dieser Feinstfaseranteil kann für eine besonders gute Festigkeit und innere Verbindung der Schicht aus Mikrofasern dienen.

Bei dem Ausgangsprodukt Mikrofasern handelt es sich vorteilhaft um Mikroglasfasern und somit um ein Produkt aus Mikroglasfasern, die mit einem sogenannten shot versehen sein können. Dabei handelt es sich um eine gleichsam tropfenförmige Verdickung an einem Ende der Mikroglasfasern. Vorteilhaft werden für die Erfindung fertige Mikrofaser-Schichten bzw. Matten aus diesem Material mit shotfreien Mikrofasern verwendet, vorteilhaft shotfreien Mikroglasfasern.

Besitzt das Ausgangsprodukt die beschriebenen shots, ist es vorteilhaft, dieses Ausgangsprodukt zunächst von den shots zu befreien, wozu gemäß dem Stand der Technik verschiedene Verfahren zur Verfügung stehen. Es können aber auch beliebige andere Fasern verwendet werden, die eine ähnliche Temperaturbeständigkeit aufweisen bzw. eine Temperaturbeständigkeit bis mindestens 300°C, vorteilhaft bis mindestens 400°C. Hier eignen sich beispielsweise auch Mikrofasern aus Steinwolle odgl. bzw. allgemein aus mineralischen Materialien.

Um Formteile herzustellen, die in mechanischer Hinsicht und/oder in wärmedämmtechnischer Hinsicht verschiedene Eigenschaften aufweisen und verschiedenen Forderungen genügen, ist es vorteilhaft, mit Mikrofasern unterschiedlichen Faserdurchmessers in der fertigen Mikrofaser-Schicht zu arbeiten. Das Mischungsverhältnis wird nach den jeweiligen Anforderungen an die hergestellten Formteile experimental ermittelt, was ohne Schwierigkeiten geschehen kann. Im Allgemeinen wird mit Mikrofasern bzw. mit Mikroglasfasern gearbeitet, deren Faserdurchmesser im Bereich von 0,5 µm bis 3,0 µm liegt. Gebrochene Mikroglasfasern besitzen zweckmäßigerweise eine Faserlänge im Bereich von 100 µm bis 10 mm. In dem Feinstfaseranteil wird nach bevorzugter Ausführungsform der Erfindung durch Einstellung von Siebverhältnissen mit Feinstfasern gearbeitet, deren Länge unter 1,5 µm liegt, vorzugsweise bei etwa 0,5 µm. Bewährt hat es sich, mit Mikroglasfasern zu arbeiten, die lediglich einen sehr geringen Anteil an Al₂O₃ aufweisen oder sogar frei von Al₂O₃ sind. Eine bevorzugte Ausführungsform der Erfindung ist in diesem Zusammenhang dadurch gekennzeichnet, dass mit Mikroglasfasern und damit Feinstfasern im Feinstfaseranteil gearbeitet wird, die der folgenden Richtanalyse genügen:
SiO₂ 59,0% - 69,0%; B₂O₃ 1,0% - 10,5%; FeO+Fe₂O₃ 0% - 0,5%; MgO 0,3% - 3,2%;
CaO 1,9% - 16,5%; Na₂O 10,0% - 15,7%; K₂O 1,0% - 3,0%; Al₂O₃ 0% - 5,8%.

Auch in die fertige Mikrofaser-Schicht kann ein Bindemittel gegeben sein, um beispielsweise eine daraus gefertigte Matte stabiler zu machen. Dies kann ein vorgenanntes Bindemittel sein.

Die Mikrofaser-Schicht kann während des Pressens auch noch einmal in ihrer Dicke reduziert werden, also verpresst bzw. kompaktiert werden. Dies kann bevorzugt auf etwa 70% bis 95% der Dicke des Ausgangsmaterials bzw. der fertigen Mikrofasermatte sein. Besonders bevorzugt sind es 80% bis 90%.

Das Schichtsilikat ist vorteilhaft Vermiculite. Dieses weist gute mechanische und dämmende Eigenschaften auf. Insbesondere kann das Schichtsilikat allgemein bevorzugt expandiertes Schichtsilikat sein, so dass vorzugsweise auch expandiertes Vermiculite verwendet werden kann.

Als Bindemittel für das Gemisch mit dem Schichtsilikat kann Wasserglas verwendet werden. Hier werden insbesondere Kaliwasserglas und Natronwasserglas als vorteilhaft angesehen. Alternativ können als Bindemittel Phosphorsäure oder ein keramischer Kleber verwendet werden.

Vorteilhaft werden das Schichtsilikat und das Bindemittel miteinander vermischt bevor sie auf die Schicht aus Mikrofasern aufgebracht werden. Besonders vorteilhaft werden sie homogen miteinander vermischt.

Anstelle eines Verpressens des Schichtaufbaus in einer Negativform mit Einfahren einer Positivform kann auch ein sonstiges Verpressen der Mikrofaser-Schicht mit dem Gemisch aus Schichtsilikat und Bindemittel erfolgen. Das Verpressen innerhalb einer Form wird aber als besonders vorteilhaft angesehen.

Bevorzugt wird ein Verpressen des Schichtaufbaus bei Raumtemperatur durchgeführt, insbesondere in einer vorgenannten Pressform. Anschließend kann ein Trocknungsvorgang erfolgen, wobei dieser Trocknungsvorgang vorteilhaft bei einer Temperatur durchgeführt wird, die über der Raumtemperatur liegt. Insbesondere kann diese Temperatur bei 50°C bis 150°C liegen. Es sollte eine Temperatur gewählt werden, bei der insbesondere ein vorgenanntes Bindemittel seine bestmögliche Wirkung entfaltet.

Ein solchermaßen mit einem vorbeschriebenen Verfahren hergestelltes Formteil kann ein Wärmedämmformteil oder eine Wärmedämmplatte sein. Es kann aber auch, insbesondere durch das Verpressen in der Pressform, bestimmte Konturen wie Vorsprünge und/oder Ausnehmungen aufweisen, die funktional und/oder für eine Befestigung vorteilhaft sind. Entlang außen umlaufender Seitenkanten oder Seitenbereiche kann ein Formteil für eine formschlüssige Verbindung mit anderen Bauteilen, insbesondere anderen oder gleichartigen Formteilen, ausgebildet sein. Dies können in einem einfachen Fall Nut und Feder sein, so dass mehrere Formteile nebeneinander platziert und sozusagen ineinander gesteckt werden können zur Befestigung.

Das Formteil kann einerseits flach sein, vorteilhaft plan, und ein Verhältnis von Dicke zu Durchmesser bzw. größter Ausdehnung haben von 1 zu 5 bis 1 zu 50, vorzugsweise 1 zu 8 bis 1 zu 20. Es kann dabei vorteilhaft zusätzliche Vertiefungen und/oder Ausnehmungen aufweisen.

Andererseits kann allgemein möglich sein, ein erfindungsgemäßes Formteil so auszubilden, dass es auch in kompliziert geformte Aufnahmen hineinpasst oder an kompliziert geformte Teile eng und weitgehend ohne Luftspalt angesetzt werden kann, vorteilhaft mit Biegungen und/oder Wölbungen. So kann es beispielsweise in Wärmeöfen odgl. eingebaut werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1 bis 3: verschiedene Verfahrensschritte eines erfindungsgemäßen Verfahrens zur Herstellung eines Formteils in einer Pressform,
- Fig. 4: ein fertiggestelltes flaches Formteil entsprechend dem Verfahren der Fig. 1 bis 3,
- Fig. 5: eine Unteransicht eines alternativen Formteils mit einer Struktur und
- Fig. 6: eine Seitenansicht des alternativen Formteils aus Fig. 5.

### DETAILLIERTE BESCHREIBUNG DER AUSFÜHRUNGSBEISPIELE

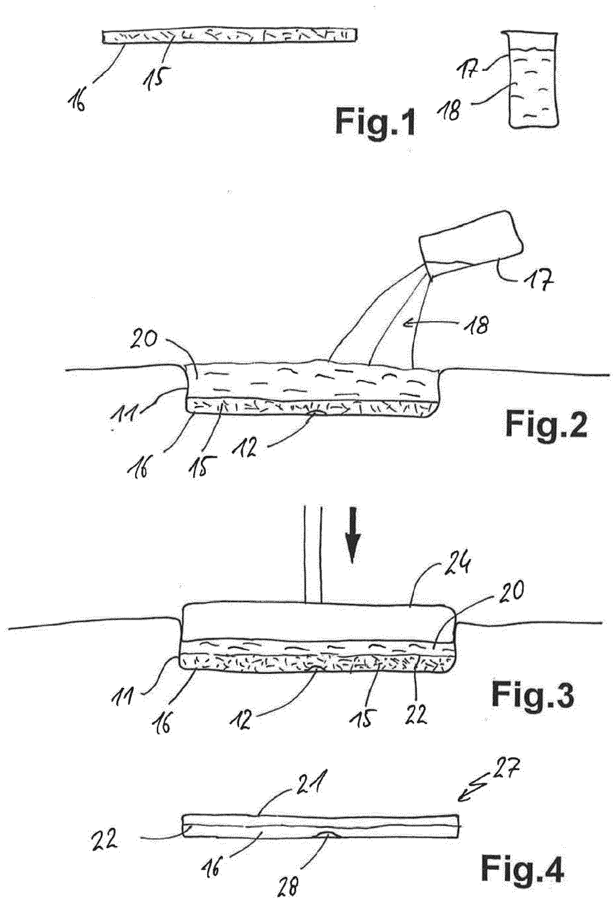

In der Fig. 1 ist ein erster Schritt eines erfindungsgemäßen Verfahrens zur Herstellung eines Formteils dargestellt. Es liegt links eine fertige Mikrofaser-Schicht 16 bestehend aus Mikroglasfasern 15 vor, beispielsweise als fertige Matte. Derartige Matten mit Mikroglasfasern werden von der Anmelderin unter der Bezeichnung "Multitherm 550" angeboten und sind eine Art Vlies. Diese Mikrofaser-Schicht 16 mit Mikroglasfasern 15 kann von der Zusammensetzung her ausgebildet sein wie zuvor beschrieben, insbesondere hinsichtlich Länge und/oder Durchmesser, beispielsweise mit einer Faserlänge zwischen 1 mm und 8 mm und einem Faserdurchmesser zwischen 0,5 µm und 3 µm. Es können auch die vorgenannten Feinstfasern enthalten sein. Die Mikrofaser-Schicht 16 kann einen Binder aufweisen, muss dies aber nicht.

Rechts ist ein fertiges Gemisch 18 in einem Mischgefäß 17 enthalten, und zwar mit expandiertem Schichtsilikat und Bindemittel. Das Schichtsilikat ist vorteilhaft expandiertes Vermiculite als ein besonders vorteilhaftes Schichtsilikat. Als Bindemittel wird hier Kaliwasserglas verwendet. Es wird vermischt, vorteilhaft homogen vermischt. Es ist sozusagen erdfeucht bzw. fließt nicht.

In der Fig. 2 ist in eine Negativform 11 einer Pressform, die mittig auf ihrer Oberseite einen Vorsprung 12 aufweist, die fertige Mikrofaser-Schicht 16 eingelegt. Dann wird auf die fertige Mikrofaser-Schicht 16 das zuvor hergestellte Gemisch 18 bzw. die Suspension aus Schichtsilikat, insbesondere Vermiculite, und Bindemittel aufgeschüttet.

Das Gemisch 18 bildet auf der fertigen Mikrofaser-Schicht 16 ein Bett 20, und zu dieser hin ist ein Übergangsbereich 22 gebildet. In diesem Übergangsbereich 22 kann bereits durch das bloße Aufschütten des Gemischs 18 mit leichtem Durchmischen eine gewisse Einmischung oder Eindringung des Bindemittels in die Mikrofaser-Schicht 16 stattfinden.

Gemäß Fig. 3 wird im nächsten Schritt zur Verpressung ein Stempel 24 als Positivform in die Negativform 11 eingefahren. Die Schichtsilikat-Schicht 21 wird dann in sich komprimiert bzw. verpresst, und auch das Bindemittel wird nochmals stärker in die Mikrofaser-Schicht 16 gepresst und dabei mit dieser verbunden. Eine Dickenreduzierung kann wie zuvor ausgeführt erheblich stärker erfolgen als hier dargestellt, da die Figuren diesbezüglich nicht maßstäblich zu verstehen sind. Die Schritte gemäß den Fig. 1 bis 3 und insbesondere das Verpressen werden vorteilhaft bei Raumtemperatur durchgeführt. Dann liegt nach dem Pressvorgang ein Formteil 27 vor, bestehend aus einer oberen Schichtsilikat-Schicht 21, einer unteren Mikrofaser-Schicht 16 und einem Übergangsbereich 22 dazwischen. Der Übergangsbereich kann eine Höhe von 0,5% bis 3% der Dicke des flachen Formteils 27 aufweisen, beispielsweise 0,1 mm bis 3 mm. An der Unterseite weist das Formteil 27 aufgrund des Vorsprungs 12 in der Negativform 11 eine Vertiefung 28 auf. Diese kann beispielsweise zum Zentrieren bzw. zur Befestigung des Formteils 27 dienen. Das Formteil 27 ist eigenstabil und deutlich fester als die Matte aus Mikroglasfasern an sich. Es kann so stabil sein, dass es wie ein beliebiges Formteil aus Vermiculite weiter verwendet werden kann. Diese Stabilität kommt vor allem von dem verpressten Vermiculite.

Das Formteil 27 wird nach dem Verpressen noch getrocknet, was vorteilhaft bei erhöhter Temperatur erfolgt. Dies ist bereits zuvor beschrieben worden. Dadurch kann ein Wasseranteil entweichen und vor allem kann das Bindemittel seine Bindewirkung entfalten. Nach dem Abschluss des Trocknungsvorgangs ist das Formteil 27 fertig zur Verwendung in einem der eingangs genannten Fälle.

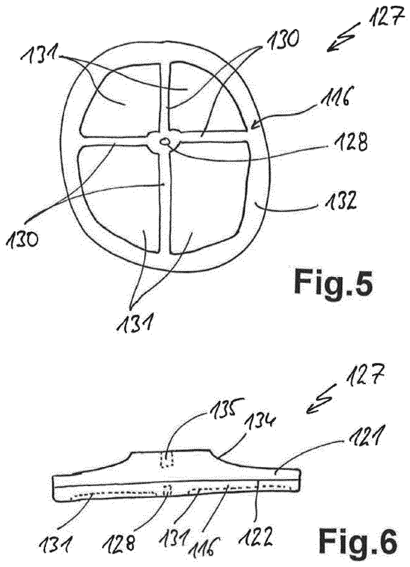

In den Fig. 5 und 6 ist eine weitere erfindungsgemäße Ausgestaltung eines Formteils 127 dargestellt, welches mit den zuvor beschriebenen Verfahrensschritten der Fig. 1 bis 3 hergestellt worden sein kann. Die Draufsicht auf die Unterseite des Formteils 127 mit einer Mikrofaser-Schicht 116 zeigt, dass hier in der Mitte eine Vertiefung 128 vorgesehen ist als eine Art Loch oder Sackbohrung. Ein erhöhter Kreisbereich um diese Vertiefung 128 geht mit vier Stegen 130 in radialer Richtung nach außen, die dann in einen breiten umlaufenden Rand 132 übergehen. Dazwischen werden vier Felder 131 mit der erkennbaren Form gebildet. Ein solches Formteil 127 kann, wie auch die Seitenansicht der Fig. 6 zeigt, auf eine flache Unterlage aufgelegt werden. Es liegt durch die etwas vertiefen Felder 131 sowohl sicher und wackelfrei auf einer Auflage als auch mit einem dünnen Luftspalt für eine bessere Wärmedämmung. Die vier Felder 131 können weniger als 2mm bzw. 1% bis 10% oder maximal 20% der Dicke des Formteils 127 vertieft sein. Ebenso können, wie die Seitenansicht der Fig. 6 zeigt, eine untere Mikrofaser-Schicht 116 und eine obere Vermiculite-Schicht 121 zumindest im Außenbereich ähnliche Dicke oder Höhe aufweisen. Bei der oberen Vermiculite-Schicht 121 ist zur Mitte hin als Besonderheit eine Art Dom 134 als allmähliche Erhöhung ausgebildet. In dessen Mitte befindet sich ein Loch 135 ähnlich der Vertiefung 128, die beide gestrichelt angedeutet sind. Dies kann zur Befestigung dienen.

Auch bei dem Formteil 127 gemäß Fig. 6 sieht man den Übergangsbereich 122 innerhalb des Formteils, durch welchen die beiden Schichten 116 und 121 fest und mechanisch stabil miteinander verbunden sind.

## Patentansprüche

1. Verfahren zur Herstellung eines Formteils (27, 127) mit einem mehrschichtigen Aufbau, wobei der mehrschichtige Aufbau mindestens eine Vermiculite-Schicht (21, 121) und mindestens eine Mikrofaser-Schicht (16, 116) aufweist, wobei die Mikrofasern einen Faserdurchmesser zwischen 0,5 µm und 3 µm aufweisen,
wobei das Verfahren die folgenden Schritte aufweist:
- die Mikrofaser-Schicht wird als fertige Mikrofaser-Schicht (16, 116) in Form einer fertigen Matte in eine Pressform (11) gelegt,
- ein Gemisch (18) aus Vermiculite und Bindemittel wird als eine Schicht (20) auf die fertige Mikrofaser-Schicht (16, 116) in Form der fertigen Matte in der Pressform (11) gegeben,
- der Schichtaufbau wird in der Pressform (11) verpresst.

2. Verfahren nach Anspruch 1, **dadurch gekennzeichnet, dass** sich das Gemisch (18) aus Vermiculite und Bindemittel mit der fertigen Mikrofaser-Schicht (16, 116) in Form der fertigen Matte verbindet, vorzugsweise zumindest in einem Übergangsbereich (22, 122) zwischen Vermiculite-Schicht (20) und fertiger Mikrofaser-Schicht (16, 116) in Form einer fertigen Matte, wobei insbesondere in dem Übergangsbereich (22, 122) eine Vermischung des Bindemittels mit den Mikrofasern bzw. mit der fertigen Mikrofaser-Schicht (16, 116) in Form der fertigen Matte erfolgt.

3. Verfahren nach Anspruch 1 oder 2, **dadurch gekennzeichnet, dass** der Übergangsbereich (22, 122) eine Dicke zwischen 0,5% und 5% der Dicke des fertigen Formteils (27, 127) aufweist.

4. Verfahren nach einem der vorhergehenden Ansprüche, **dadurch gekennzeichnet, dass** die Mikrofasern eine Faserlänge zwischen 0,1 mm und 10 mm aufweisen.

5. Verfahren nach einem der vorhergehenden Ansprüche, **dadurch gekennzeichnet, dass** das Vermiculite expandiert ist.

6. Verfahren nach einem der vorhergehenden Ansprüche, **dadurch gekennzeichnet, dass** die Mikrofasern Mikroglasfasern sind.

7. Verfahren nach einem der vorhergehenden Ansprüche, **dadurch gekennzeichnet, dass** als Bindemittel Wasserglas verwendet wird, insbesondere Kaliwasserglas.

8. Verfahren nach einem der vorhergehenden Ansprüche, **dadurch gekennzeichnet, dass** das Vermiculite und das Bindemittel miteinander vermischt werden vor dem Aufbringen auf die fertige Mikrofaser-Schicht (16, 116) in Form der fertigen Matte, insbesondere homogen miteinander vermischt werden.

9. Verfahren nach einem der vorhergehenden Ansprüche, **dadurch gekennzeichnet, dass** die fertige Mikrofaser-Schicht (16, 116) in Form der fertigen Matte in eine Negativform (11) als Pressform gelegt wird, wobei vorzugsweise zum Verpressen ein Stempel (24) als Positivform in die Negativform (11) eingefahren wird.

10. Verfahren nach einem der vorhergehenden Ansprüche, **dadurch gekennzeichnet, dass** das Verpressen in der Pressform (11) bei Raumtemperatur durchgeführt wird, wobei vorzugsweise anschließend ein Trocknungsvorgang bei einer Temperatur durchgeführt wird, die über der Raumtemperatur liegt, insbesondere bei einer Temperatur von 50°C bis 150°C durchgeführt wird.

11. Formteil (27, 127), insbesondere Wärmedämmteil, herstellbar durch ein Verfahren nach einem der vorhergehenden Ansprüche.

12. Formteil (27, 127) nach Anspruch 11, **dadurch gekennzeichnet, dass** es flach ist.

## Claims

1. Method for producing a molded part (27, 127) having a multilayered structure, wherein the multilayered structure includes at least one vermiculite layer (21, 121) and at least one microfiber layer (16, 116), wherein the microfibers have a fiber diameter between 0.5 µm and 3 µm,
wherein the method comprises the following steps:
- the microfiber layer is placed into a press mold (11) as a finished microfiber layer (16, 116) in the form of a finished mat,
- a mixture (18) composed of vermiculite and binder is added in one layer (20) onto the finished microfiber layer (16, 116) in the form of the finished mat in the press mold (11),
- the layered structure is subject to pressing in the press mold (11).

2. Method according to claim 1, **characterized in that** the mixture (18) composed of vermiculite and binder combines with the finished microfiber layer (16, 116) in the form of the finished mat, preferably at least in a transition zone (22, 122) between vermiculite layer (20) and finished microfiber layer (16, 116) in the form of a finished mat, wherein in particular in the transition zone (22, 122) intermixing of the binder with the microfibers and the finished microfiber layer (16, 116) in the form of the finished mat occurs.

3. Method according to claim 1 or 2, **characterized in that** the transition zone (22, 122) has a thickness between 0.5% and 5% of the thickness of the finished molded part (27, 127).

4. Method according to any of the preceding claims, **characterized in that** the microfibers have a fiber length between 0.1 mm and 10 mm.

5. Method according to any of the preceding claims, **characterized in that** the vermiculite is expanded.

6. Method according to any of the preceding claims, **characterized in that** the microfibers are microglass fibers.

7. Method according to any of the preceding claims, **characterized in that** water glass is used as a binder, in particular potassium water glass.

8. Method according to any of the preceding claims, **characterized in that** the vermiculite and the binder are admixed prior to application onto the finished microfiber layer (16, 116) in the form of the finished mat, in particular are homogeneously admixed.

9. Method according to any of the preceding claims, **characterized in that** the finished microfiber layer (16, 116) in the form of the finished mat is placed into a negative mold (11) as the press mold, wherein preferably a piston (24) is inserted into the negative mold (11) as a positive mold during pressing.

10. Method according to any of the preceding claims, **characterized in that** the pressing in the press mold (11) is performed at room temperature, wherein preferably subsequently a drying procedure is performed at a temperature that is above room temperature, in particular is performed at a temperature of 50°C to 150°C.

11. Molded part (27, 127), in particular thermal insulation part, producible by a method according to any of the preceding claims.

12. Molded part (27, 127) according to claim 11, **characterized in that** it has a flat shape.

## Revendications

1. Procédé de fabrication d'une pièce moulée (27, 127) munie d'une structure multicouche, la structure multicouche comprenant au moins une couche de vermiculite (21, 121) et au moins une couche de microfibres (16, 116), les microfibres présentant un diamètre de fibre compris entre 0,5 µm et 3 µm,
le procédé comprenant les étapes suivantes :
- la couche de microfibres est déposée en tant que couche de microfibres finie (16, 116) sous la forme d'un mat fini dans un moule de compression (11),
- un mélange (18) de vermiculite et de liant est ajouté en tant qu'une couche (20) sur la couche de microfibres finie (16, 116) sous la forme du mat fini dans le moule de compression (11),
- la structure de couches est comprimée dans le moule de compression (11).

2. Procédé selon la revendication 1, **caractérisé en ce que** le mélange (18) de vermiculite et de liant se lie avec la couche de microfibres finie (16, 116) sous la forme du mat fini, de préférence au moins dans une zone de transition (22, 122) entre la couche de vermiculite (20) et la couche de microfibres finie (16, 116) sous la forme d'un mat fini, un mélange du liant avec les microfibres ou avec la couche de microfibres finie (16, 116) sous la forme du mat fini ayant notamment lieu dans la zone de transition (22, 122).

3. Procédé selon la revendication 1 ou 2, **caractérisé en ce que** la zone de transition (22, 122) présente une épaisseur comprise entre 0,5 % et 5 % de l'épaisseur de la pièce moulée finie (27, 127).

4. Procédé selon l'une quelconque des revendications précédentes, **caractérisé en ce que** les microfibres présentent une longueur de fibre comprise entre 0,1 mm et 10 mm.

5. Procédé selon l'une quelconque des revendications précédentes, **caractérisé en ce que** la vermiculite est expansée.

6. Procédé selon l'une quelconque des revendications précédentes, **caractérisé en ce que** les microfibres sont des microfibres de verre.

7. Procédé selon l'une quelconque des revendications précédentes, **caractérisé en ce que** du verre soluble est utilisé en tant que liant, notamment du verre soluble de potassium.

8. Procédé selon l'une quelconque des revendications précédentes, **caractérisé en ce que** la vermiculite et le liant sont mélangés l'un avec l'autre avant l'application sur la couche de microfibres finie (16, 116) sous la forme du mat fini, notamment sont mélangés l'un avec l'autre de manière homogène.

9. Procédé selon l'une quelconque des revendications précédentes, **caractérisé en ce que** la couche de microfibres finie (16, 116) sous la forme du mat fini est déposée dans un moule négatif (11) en tant que moule de compression, un poinçon (24) en tant que moule positif étant de préférence rentré dans le moule négatif (11) pour la compression.

10. Procédé selon l'une quelconque des revendications précédentes, **caractérisé en ce que** la compression dans le moule de compression (11) est réalisée à température ambiante, un processus de séchage étant de préférence ensuite réalisé à une température qui se situe au-dessus de la température ambiante, notamment à une température de 50 °C à 150 °C.

11. Pièce moulée (27, 127), notamment pièce d'isolation thermique, pouvant être fabriquée par un procédé selon l'une quelconque des revendications précédentes.

12. Pièce moulée (27, 127) selon la revendication 11, **caractérisée en ce qu'**elle est plate.
